# FASCICULE DE BREVET EUROPEEN

(11) **EP 0 359 657 B1**
(45) Date de publication et mention de la délivrance du brevet: **28.04.1993**
(21) Numéro de dépôt: 89402491.8
(22) Date de dépôt: 12.09.1989
(51) Int. Cl.: F28F 9/02, F16L 37/00

(54) **Dispositif de raccord rapide d'une boîte à fluide d'échangeur de chaleur**
Schnellverbindungsvorrichtung für die Endkammer eines Wärmetauschers
Rapid-connection device for a header box of a heat exchanger

(30) Priorité: 15.09.1988 FR 8812048
(43) Date de publication de la demande: 21.03.1990
(73) Titulaire: VALEO THERMIQUE MOTEUR, 78320 Le Mesnil Saint-Denis (FR); HUTCHINSON, F-75008 Paris (FR)
(72) Inventeur: Potier, Michel, F-78120 Rambouillet (FR); Briet, Gilles, F-78130 Geugnon (FR)
(74) Mandataire: Netter, André

(56) Documents cités:
- EP-A- 0 029 859
- DE-A- 2 243 617
- DE-U- 8 630 847
- FR-A- 1 531 455
- FR-A- 2 444 580
- FR-A- 2 499 704
- FR-A- 2 579 308
- FR-A- 2 582 076
- US-A- 4 007 952

## Description

L'invention concerne un ensemble selon le préambule de la revendication 1, comme décrit dans la Demande de Brevet français FR-A-2579308.

Cet ensemble peut être prévu pour un échangeur de chaleur, notamment pour véhicule automobile, comportant un faisceau de tubes formé soit par des tubes en U reliant l'une à l'autre les deux chambres de la boîte à fluide, soit par des tubes droits divisés en deux groupes qui relient respectivement les deux chambres à une seconde boîte à fluide située à l'opposé de la première. Ce dispositif de raccord rapide remplace les dispositifs classiques comportant un embout d'entrée et un embout de sortie faisant saillie en deux endroits éloignés de la boîte à fluide, et sur lesquels on enfile par des opérations séparées des tuyaux souples.

Le but de l'invention est de procurer un dispositif du type défini ci-dessus permettant une simplification de la structure de la boîte à fluide par rapport à celle décrite dans le document antérieur.

Dans le dispositif selon l'invention, la cloison de la boîte à fluide est sensiblement plane sur toute son étendue, et les ouvertures d'entrée et de sortie sont disposées de part et d'autre du plan de la cloison, tout en étant situées à proximité de celle-ci, de plus la boîte à fluide présente un rebord annulaire en saillie vers l'extérieur, entourant l'ensemble des ouvertures d'entrée et de sortie et assurant le centrage de l'organe de raccord et les passages de fluide de l'organe de raccord sont formés par deux parois tubulaires écartées l'une de l'autre et réunies au voisinage de leur extrémité par une platine transversale coopérant par sa périphérie avec le rebord de la boîte à fluide.

De préférence, la boîte à fluide et l'organe de raccord présentent des moyens de verrouillage mutuel en position de raccordement.

L'invention s'applique particulièrement à une boîte à fluide dont la cloison est perpendiculaire à la direction longitudinale de la boîte à fluide.

Avantageusement, le dispositif selon l'invention comprend en outre des moyens pour relier un circuit de dégazage à un vase d'expansion solidaire de la boîte à fluide.

L'organe de raccord peut comprendre une tubulure de dégazage faisant saillie au-delà de sa platine pour pénétrer dans la boîte à fluide. Cette tubulure de dégazage peut communiquer, à l'intérieur de la boîte à fluide, avec une conduite de liaison pour le vase d'expansion séparée des deux chambres de la boîte à fluide.

Des avantages de l'invention ressortiront de la description ci-après de deux exemples de réalisation, et des dessins annexés dans lesquels :
- la figure 1 est une vue partielle en élévation d'une boîte à fluide destinée à être raccordée à un circuit au moyen d'un dispositif de raccord rapide selon l'invention, dans un premier exemple de réalisation;
- les figures 2 et 3 sont des vues partielles de la boîte à fluide en coupe selon les lignes II-II et III-III respectivement de la figure 1; et
- la figure 4 est une vue partielle en plan de l'organe de raccord associé à la boîte à fluide des figures 1 à 3.

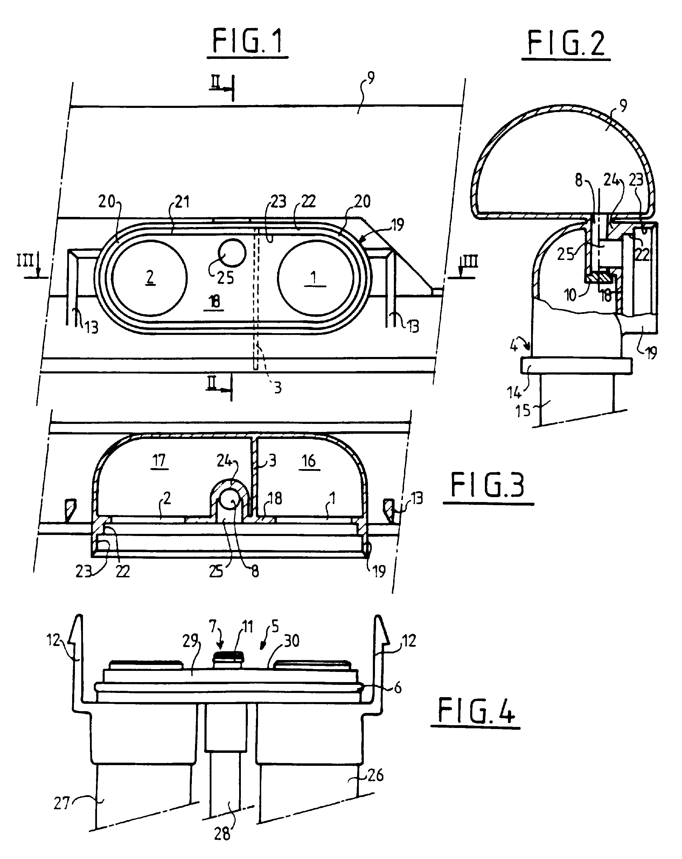

Les figures 1 à 3 illustrent partiellement un échangeur de chaleur de véhicule automobile comprenant une boîte à fluide supérieure 4 associée à un collecteur 14 traversé par les extrémités supérieures de tubes 15 orientés verticalement et s'étendant chacun sensiblement sur toute la largeur de la boîte à fluide 4, lesdits tubes 15 communiquant par leur extrémité inférieure avec une boîte à fluide inférieure (non représentée). La boîte à fluide 4 est surmontée d'un vase d'expansion 9 formé d'une seule pièce moulée avec elle. La boîte à fluide est divisée intérieurement, dans sa direction longitudinale, en deux chambres 16 et 17 par une cloison 3 entièrement plane s'étendant transversalement. La cloison 3, moulée d'une seule pièce avec la boîte à fluide, est en liaison étanche par son extrémité inférieure avec le collecteur 14, et se raccorde par la partie restante de son périmètre à la paroi de la boîte à fluide, et en particulier à une portion de paroi plane 18 dans laquelle sont ménagées, de part et d'autre de la cloison et à proximité de celle-ci, deux ouvertures circulaires 1 et 2 en correspondance des chambres 16 et 17 respectivement. Un rebord annulaire 19, entourant les ouvertures 1 et 2, fait saillie vers l'extérieur à partir de la portion de paroi 18. Le rebord 19 est dirigé sensiblement perpendiculairement à la portion de paroi 18 et présente, selon le plan de celle-ci, une forme générale oblongue comprenant deux parties terminales semi-circulaires 20, coaxiales aux ouvertures 1 et 2, raccordées entre elles par des sections rectilignes 21. Le rebord présente sur tout son contour un profil uniforme comportant vers l'intérieur du rebord une partie rectiligne 22 adjacente à la portion de paroi 18 et perpendiculaire à celle-ci, et une seconde partie rectiligne 23 parallèle à la partie 22 et décalée par rapport à celle-ci vers l'extérieur de la boîte à fluide et vers l'extérieur du rebord.

La paroi 18 de la boîte à fluide présente un bossage interne 24 faisant saillie dans la chambre 17 et adjacente à la portion de paroi 18. Le bossage 24 est traversé par un alésage 8 s'étendant parallèlement aux tubes 15, qui débouche à son extrémité supérieure dans le vase d'expansion 9 et qui est obturé par un bouchon 10 lié de manière inamovible à son extrémité inférieure, qui en l'absence de ce bouchon déboucherait dans la chambre 17. Un autre alésage 25 est ménagé perpendiculairement à la portion de surface 18, entre celle-ci et l'alésage 8. L'alésage 25 débouche d'une part sur la face externe de la portion de paroi 18, à l'intérieur du rebord 19 et entre les ouvertures 1 et 2, et d'autre part dans l'alésage 8 en permettant la communication entre ceux-ci.

Des nervures d'accrochage 13 sont prévues à l'extérieur sur la paroi de la boîte à fluide, de part et d'autre de la longueur du rebord 19.

L'organe de raccord monobloc 5 illustré à la figure 4 comprend trois tubulures parallèles 26, 27 et 28 réunies entre elles au voisinage d'une de leurs extrémités par une platine 29 s'étendant perpendiculairement à leur axe. La disposition des axes des tubulures et leur diamètre dans leur partie extrême en saillie par rapport à la platine 29 sont tels que ces parties extrêmes puissent s'engager respectivement dans les ouvertures 1 et 2 et dans l'alésage 25. Comme mieux visible sur les figures, l'extrémité 7 de la tubulure 28 fait saillie bien au-delà de la platine 29 de façon à ce que, en position montée, ladite extrémité pénètre à l'intérieur de la boîte à fluide et permette la communication entre le vase d'expansion et la tubulure 28. La platine 29 présente une face avant 30 qui vient en appui sur la face externe de la portion de paroi 18 de la boîte à fluide, la périphérie de la platine coopérant avec le rebord 19, et en particulier avec le profil intérieur 22, 23 de ce dernier, pour le centrage de l'organe de raccord. La périphérie de la platine porte un joint torique d'étanchéité oblong 6 qui s'appuie sur toute la longueur contre la partie 23 du profil du rebord. La partie extrême 7 de la tubulure 28 est entourée par un joint d'étanchéité 11 qui s'appuie contre la paroi de l'alésage 25.

L'organe de raccord 5 présente deux pattes flexibles 12 coopérant avec les nervures 13 pour son verrouillage sur la boîte à fluide.

## Revendications

1. Ensemble composé d'une boîte à fluide pour un échangeur de chaleur, comprennant une chambre d'entrée de fluide et une chambre de sortie de fluide (16,17) séparées l'une de l'autre par une cloison (3), et présentant des ouvertures d'entrée et de sortie (1,2) adjacentes pour les deux chambres, et d'un organe de raccord monobloc (5) pour le raccordement simultané de ces deux chambres à un circuit extérieur, muni d'au moins deux passages de fluide (26,27) et propre à être monté sur la boîte à fluide de façon que ces deux passages de fluide communiquent respectivement avec les deux ouvertures de la boîte à fluide, caractérisé en ce que la cloison (3) de la boîte à fluide est sensiblement plane sur toute son étendue et que les ouvertures d'entrée et de sortie (1,2) sont disposées de part et d'autre du plan de la cloison (3) tout en étant situées à proximité de celle-ci,
en ce que la boîte à fluide présente un rebord annulaire (19) en saillie vers l'extérieur, entourant l'ensemble des ouvertures d'entrée et de sortie et assurant le centrage de l'organe de raccord, et
en ce que les passages de fluide de l'organe de raccord sont formés par deux parois tubulaires (26, 27) écartées l'une de l'autre et réunies au voisinage de leur extrémité par une platine transversale (29) coopérant par sa périphérie avec le rebord de la boîte à fluide.

2. Ensemble selon la revendication 1, caractérisé en ce que la boîte à fluide et l'organe de raccord présentent des moyens (12,13) de verrouillage mutuel en position de raccordement.

3. Ensemble selon l'une des revendications précédentes, caractérisé en ce qu'il comprend en outre des moyens (8,25, 28) pour relier un circuit de dégazage à un vase d'expansion (9) solidaire de la boîte à fluide.

4. Ensemble selon la revendication 3, caractérisé en ce que l'organe de raccord comprend une tubulure de dégazage (7,48) faisant saillie au-delà de sa platine (29) pour pénétrer dans la boîte à fluide (4,4').

5. Ensemble selon la revendication 4, caractérisé en ce que la tubulure de dégazage communique, à l'intérieur de la boîte à fluide, avec une conduite de liaison (8) pour la vase d'expansion séparée des deux chambres de la boîte à fluide.

## Patentansprüche

1. Zusammenbau, bestehend aus einer Endkammer eines Wärmetauschers, enthaltend eine Flüssigkeitseinlaufkammer und eine Flüssigkeitsauslaufkammer (16, 17), die voneinander durch eine Trennwand (3) getrennt sind und angrenzende Einlauf- und Auslauföffnungen (1, 2) für die beiden Kammern aufweisen, sowie ein einteiliges Verbindungsorgan (5) für den gleichzeitigen Anschluß dieser beiden Kammern an einen äußeren Kreislauf, versehen mit wenigstens zwei Flüssigkeitsdurchtritten (26, 27) und geeignet zur Anbringung an der Endkammer in der Weise, daß diese beiden Flüssigkeitsdurchtritte jeweils mit den beiden Öffnungen der Endkammer kommunizieren, **dadurch gekennzeichnet,** daß die Trennwand (3) der Endkammer über ihre gesamte Abmessung im wesentlichen flach ist, daß die Einlauf- und Auslauföffnungen (1, 2) beiderseits der Ebene der Trennwand (3) in Nähe derselben angeordnet sind, daß die Endkammer einen ringförmigen Rand (19) aufweist, der nach außen vorspringt und die aus Einlauf- und Auslauföffnungen bestehende Anordnung umgibt und die Zentrierung des Verbindungsorgans gewährleistet und daß die Flüssigkeitsdurchtritte des Verbindungsorgans aus zwei rohrförmigen Wänden (26, 27) bestehen, die einen Abstand zueinander aufweisen und in Nähe ihrer Enden durch eine Querplatte (29) miteinander verbunden sind, welche an ihrer Peripherie mit dem Rand der Endkammer zusammenwirkt.

2. Zusammenbau nach Anspruch 1, **dadurch gekennzeichnet,** daß die Endkammer und das Verbindungsorgan Mittel (12, 13) zur gegenseitigen Verriegelung in Verbindungsposition aufweisen.

3. Zusammenbau nach einem der vorherigen Ansprüche, **dadurch gekennzeichnet,** daß er außerdem Mittel (8, 25, 28) aufweist, um einen Entgasungskreislauf an ein fest mit der Endkammer verbundenes Expansionsgefäß (9) anzuschließen.

4. Zusammenbau nach Anspruch 3, **dadurch gekennzeichnet,** daß das Verbindungsorgan einen Entgasungsstutzen (7, 48) enthält, der über die Platte (29) hinausragt und in die Endkammer (4, 4') eindringt.

5. Zusammenbau nach Anspruch 4, **dadurch gekennzeichnet,** daß der Entgasungsstutzen im Innem der Endkammer mit einer Verbindungsleitung (8) für das Expansionsgefäß kommuniziert, welches von den beiden Rarem der Endkammer getrennt ist.

## Claims

1. An assembly comprising a fluid header for a heat exchanger, comprising a fluid inlet chamber and a fluid outlet chamber (16, 17) separated from each other by a bulkhead (3) and having inlet and outlet ports (1, 2) adjacent to each other for the two chambers, together with a monobloc connecting member (5) for the simultaneous connection of the two said chambers to an external circuit, provided with at least two fluid passages (26, 27) and adapted to be mounted on the fluid header in such a way that the two said fluid passages communicate respectively with the two ports of the fluid header, characterised in that the bulkhead (3) of the fluid header is substantially flat over its whole extent, in that the inlet and outlet ports (1, 2) are disposed on either side of the plane of the bulkhead (3) while being situated close to the latter, in that the fluid header has an annular flange (19), projecting outwardly and surrounding both the inlet and outlet ports while centring the connecting member, and in that the fluid passages of the connecting member are defined by two tubular walls (26, 27) which are spaced apart and joined in the vicinity of their ends by means of a transverse plate element (29) cooperating through its periphery with the flange of the fluid header.

2. An assembly according to Claim 1, characterised in that the fluid header and the connecting member have locking means (12, 13) for locking them together in a connected position.

3. An assembly according to one of the preceding Claims, characterised in that it further includes means (8, 25, 28) for connecting a degassing circuit to an expansion vessel (9) which is fixed to the fluid header.

4. An assembly according to Claim 3, characterised in that the connecting member includes a degassing tube element (7, 48) projecting from its plate element (29) so as to penetrate into the fluid header (4, 4').

5. An assembly according to Claim 4, characterised in that the degassing tube element communicates within the fluid header with a connecting duct (8) for the expansion vessel, separated from the two chambers of the fluid header.
